# EUROPEAN PATENT SPECIFICATION

(11) **EP 3 501 915 B1**
(45) Date of publication and mention of the grant of the patent: **10.06.2020**
(21) Application number: 18212688.8
(22) Date of filing: 14.12.2018
(51) Int. Cl.: B60R 25/09

(54) **WHEEL CLAMP AND METHOD OF FITMENT**
RADKLEMME UND VERFAHREN ZUR MONTAGE
CRAMPON DE ROUE ET PROCÉDÉ DE MONTAGE

(30) Priority: 20.12.2017 GB 201721404
(43) Date of publication of application: 26.06.2019
(73) Proprietor: Maypole Limited, Woodgate Business Park Birmingham B32 3DE (GB)
(72) Inventor: Jones, Christopher, Birmingham B32 3DE (GB); Sworder, Malcolm Alan, Birmingham B32 3DE (GB)
(74) Representative: Gee, Steven William

(56) References cited:
- EP-A1- 1 340 658
- GB-A- 2 037 242
- GB-A- 2 263 454
- GB-A- 2 278 585
- US-A- 5 214 944

## Description

### FIELD OF THE INVENTION

This invention relates to a wheel clamp and method of fitment.

In the following description, directional and orientational terms such as "top", "bottom" etc. refer to the wheel clamp when fitted to a road wheel in its normal orientation of use, but it will be understood that the orientation of the wheel clamp can be changed.

### BACKGROUND TO THE INVENTION

In order to reduce the likelihood that a vehicle can be unlawfully removed, it is known to fit a wheel clamp to a road wheel of the vehicle. Wheel clamps fall into two broad classes. The first class comprises wheel clamps having (typically) three arms which can be spaced apart to lie against three separate parts of the road wheel. A wheel clamp falling into this general class is described in EP 1 340 658.

Typically, the predetermined angular positions of the arms correspond to the 12 o'clock, 4 o'clock and 8 o'clock positions relative to the wheel, so that in the fitted wheel clamp the respective arms are secured approximately 120° apart around the periphery of the wheel. The arm at the 12 o'clock position is referred to herein as the "top arm" and the other two arms are referred to herein as the "bottom arms". The top and bottom arms each include a radial portion and an axial portion ("radial" and "axial" being considered relative to the axis of rotation of the road wheel), the axial portions engaging the tread of the tyre when in use. At least one (and often all) of the arms is of general U-shape, and so has a "return radial" portion which can pass behind the road wheel and prevent the removal of the clamp in an axial direction.

At least one of the arms, often the top arm, is removable from the clamp body. This permits the bottom arms and clamp body to be positioned against the road wheel in the first stage of fitment. When the clamp body and bottom arms have been positioned against the road wheel, the top arm can be fitted to the clamp body. The arms and clamp body are then secured relative to one another, and to the road wheel, by a key-locking means. Often, the key-locking means will also secure a cover plate to the clamp body which prevents the reversal of the fitting process, and thereby prevents unauthorised removal of the wheel clamp.

It is understood that the arm portions of the prior art devices, and also of the present invention, need not be precisely radial and axial respectively, though this is generally preferred.

Typically, at least one of the bottom arms will include an extension piece which projects a significant distance beyond the periphery of the road wheel. Accordingly, when the wheel clamp is fitted the wheel cannot be rotated without the extension piece fouling the ground and/or a part of the vehicle.

The second class of wheel clamp comprises those wheel clamps which typically have a clamping element adapted to embrace a part of the road wheel, or a locking bar adapted to fit through an opening of the road wheel. Examples utilising a locking bar adapted to fit through an opening of the road wheel are suited to alloy wheels for example which have relatively large spaces between the spokes through which the locking bar can be passed. The clamping element or locking bar is connected to an arm which is designed to project beyond the periphery of the wheel, so that the wheel cannot be rotated without the arm fouling the ground and/or a part of the vehicle. The wheel clamp typically also has a cover plate which is designed to be larger than the spacing between the spokes of the road wheel, whereby to prevent the clamping element or locking bar being removed from between the spokes. The cover plate is also designed to obscure at least one of the wheel nuts so that the road wheel cannot be removed and the wheel clamp circumvented. A wheel clamp falling into this general class is described in EP 2 404 790. Some wheel clamps of this second class are bolted directly to the wheel.

Wheel clamps such as those described in both general classes are often used to protect caravans, motorhomes and campervans whilst in long-term storage or on camp sites, to protect cars upon dealer forecourts, and to protect trailers when not in use, for example.

The present invention provides a wheel clamp falling into the first general class described above.

It is a feature of many wheel clamps, particularly of the first class, that they are generally bulky and heavy, with many manufacturers seeking to give the impression of better security by increasing the dimensions and weight of the wheel clamp. In practice, however, it is good design which makes a wheel clamp secure.

The bulk and weight of the wheel clamp is a particular concern for wheel clamps of the first class described above. Wheel clamps in this class generally have a greater number of components which must be manipulated during fitment. Often, the components can move relative to one another before they are secured, so that it is necessary to manipulate one component whilst supporting another component or components. The combined weight of the components, and their possible relative movement, are known to often make it difficult for one person to manipulate the components and to support the components as required during fitment (and during removal).

With most wheel clamps of the first class, the components are partially assembled prior to fitting the wheel clamp to the road wheel. For example, as explained above, in many wheel clamps of the first class the clamp body and bottom arms are first assembled together and are then positioned together adjacent to the road wheel prior to fitment of the top arm, the cover plate and the key-locking means. The clamp body and bottom arms must be held close to their required position whilst the remainder of the wheel clamp is assembled and secured. The weight of the clamp body and bottom arms can be considerable, and it is not always possible for one person to hold the clamp body and bottom arms in their required position with one hand whilst using the other hand to manipulate and assemble the top arm, cover plate and key-locking means. The difficulty of the fitting procedure is exacerbated for those wheel clamps in which the arms must be manipulated into their chosen angular positions as part of the assembly procedure.

Also, the space between the tyre and the vehicle bodywork is often small and the user must nevertheless manipulate at least the top arm within that space. It is often difficult for the user to manipulate the top arm as required, especially if other components must be pre-assembled with the top arm to create a bulky subassembly.

It is widely recognised that many of the road wheels to which a wheel clamp may be fitted are made of alloy with a decorative paint finish. The paint finish is susceptible to damage during the fitment and removal of a wheel clamp, and many users take as much care as possible to prevent damage to the road wheel during fitment and removal of a wheel clamp. The manufacturers of some wheel clamps have recognised this concern and provide protective pieces of rubber or the like on those parts of the wheel clamp most likely to engage the alloy parts of the road wheel. Despite the protective pieces, however, the size and weight of the wheel clamps, and the difficulty of manipulating the wheel clamp during fitment and removal, makes avoiding damage to the road wheel difficult to achieve in practice for many users. It is also not always easy to avoid damaging the vehicle's bodywork surrounding the road wheel.

### SUMMARY OF THE INVENTION

The inventors have appreciated the difficulties which arise because of the size and weight of the wheel clamp and the complexity of the fitting procedure, and the possible damage which can therefore occur during fitment and removal of the wheel clamp. It is an object of the present invention to reduce the difficulty for users by providing a wheel clamp which can be fitted and removed in a sequence of simplified operations. Also, the inventors have sought to reduce the size and weight of the components which must be manipulated in each stage of the fitting and removal procedure. Furthermore, the inventors have sought to design a wheel clamp of the first class which is at least as secure as many of the known wheel clamps, but is resistant to attack, lightweight and easy to assemble. It is expected that the present wheel clamp will increase the take up and utility of wheel clamps by virtue of them becoming more acceptable to more users.

According to the first aspect of the invention, there is provided a wheel clamp comprising a clamp body to which three arms can be mounted, the three arms comprising a first arm, a second arm and a third arm, each of the arms having a radial portion and an axial portion, at least one of the arms having a return radial portion, the arms being securable at predetermined positions relative to the clamp body, the second and third arms each being releasably mounted to the clamp body by way of at least one mushroom-headed pin locatable in a keyhole aperture.

Typically, the first arm will be the top arm and the second and third arms will be the bottom arms. The reference to "first", "second" and "third" is to clartify that the orientation of the arms in an assembled wheel clamp is not relevant to the invention.

In this description "mushroom-headed" means that the pin has a head of larger cross-sectional dimension than the shaft. Also, in this description, a keyhole aperture has a first region with a relatively large cross-sectional dimension and a second region with a relatively small cross-sectional dimension. It is arranged that the head of the mushroom-headed pin can pass through the first region of the keyhole aperture, but cannot pass through the second region of the keyhole aperture, and that the shaft of the mushroom-headed pin can fit into the second region. Accordingly, to fit the mushroom-headed pin into the keyhole aperture it is necessary to pass the head of the mushroom-headed pin through the first region and then to move the parts relative to one another so that the shaft of the pin enters the second region of the keyhole. Such an arrangement is known to be secure because it is necessary to move the respective parts in two different directions (usually perpendicular directions) in order to release the mushroom-headed pin from the keyhole aperture. The key-locking means can act to prevent movement in either of those different directions. It can be arranged for the key-locking means to lock the shaft in the second region of the keyhole aperture, in which case an attempt to forcibly separate the mushroom-headed pin from the keyhole aperture does not need to be resisted solely by the key-locking means.

Apart from being mushroom-headed, the pins can take many detailed forms and many different projecting elements can be used with the present invention. The pins are preferably permanently mounted but the use of removable pins is not excluded.

Preferably, the second and third arms are releasably mounted by two (or more) mushroom-headed pins. The use of at least two mushroom-headed pins for each of the second and third arms means that the orientation of these arms relative to the clamp body, and therefore their orientation relative to each other, can be controlled by the positions of the pins. The pins can therefore be positioned to ensure that the second and third arms are mounted approximately 120° apart. In an alternative embodiment using only one mushroom-headed pin for each of the second and third arms, the clamp body can have one or more guides to control the orientation of the second and third arms

Desirably, the first arm is also releasably mounted to the clamp body. It is nevertheless within the scope of the present invention for the first arm to be permanently secured to the clamp body. Even if the first arm is permanently secured, however, it is desirable that it is adjustably positioned relative to the clamp body.

Preferably, the clamp body has a sleeve which can accommodate a part of the first arm. The first arm can be arranged to slide in the sleeve, and can ideally be removed from the sleeve when desired. Desirably the sleeve has a securing hole through which a securing bolt can be passed. Desirably also the first arm has a threaded aperture which can be aligned with the securing hole, whereby the securing bolt can pass through the securing hole and into the threaded aperture to hold the first arm relative to the clamp body.

The use of sleeve for the first arm means that the orientation of the first arm relative to the clamp body, and therefore its orientation relative to the second and third arms, can be controlled by the sleeve. The sleeve can therefore be positioned and oriented to ensure that the first arm is mounted approximately 120° away from each of the second and third arms.

Preferably, each of the arms is radially adjustable relative to the clamp body whereby to fit different-diameter road wheels. Each of the second and third arms is preferably adjustable by providing two or more keyhole apertures, so that the user can fit the mushroom-headed pin(s) into the keyhole aperture(s) suited to the size of the particular road wheel. Preferably also, the first arm is radially adjustable by providing a plurality of securing holes in the sleeve through which the securing bolt can pass, the user fitting the securing bolt through the securing hole suited to the size of the particular road wheel.

Desirably, the second and third arms are tubular (or of box section), or otherwise hollow so as to reduce their weight. It is recognised that tubular or box section components can be stronger than solid components of the same weight. Alternatively, other profiles known to provide good strength-to-weight characteristics can be used. Desirably, the mushroom-headed pins are mounted to the clamp body and the keyhole apertures are formed in the second and third arms. Ideally the keyhole apertures are formed through only one wall of the hollow arm so that in the fitted wheel clamp the head of each mushroom-headed pin lies inside the hollow arm. Such an arrangement obscures the head of the mushroom-headed pins, and thereby obscures the means by which the second and thirs arms are secured, even if unauthorised access to the clamp body is obtained.

The clamp body preferably includes a back plate which is adapted to lie close to or against the surface of the road wheel in use. The back place can carry one or more protective pieces to reduce the likelihood of damage to the road wheel during fitment and removal. Ideally almost all of the back surface of the back plate is fitted with a sheet of material to protect the road wheel from inadvertent damage.

The wheel clamp preferably includes a cover plate which can be secured to the clamp body by a key-locking means. Desirably the cover plate and the clamp body have cooperating or interlocking formations so that they can be held together without the key-locking means. The cooperating formations desirably include at least one tab or tongue which fits into an opening, recess or groove. The cooperating formations can also include at least one channel and rail arrangement.

The cooperating or interlocking formations do not secure the cover plate to the clamp body but they do hold the two parts together so that the user can fit the key-locking means without needing to support the cover plate and/or clamp body at the same time. The user can therefore choose to fit the key-locking means immediately, or can delay doing so in the knowledge that the components of the wheel clamp will remain in place without external support. Desirably, the cooperating or interlocking formations hold the cover plate to the clamp body by way of gravity, i.e. the cover plate is lowered into position relative to the clamp body during assembly, and is lifted from the clamp body during disassembly. Preferably, the fitted cover plate obscures the back plate, including the sleeve, and also overlies the mushroom-headed pins. Accordingly, the fitted cover plate covers the mounting for the first, second and third arms. Those mountings can therefore be obscured from view and made inaccessible when the cover plate is fitted.

The cover plate is preferably fitted to the clamp body in a first direction, and the key-locking means is fitted in a second direction. Preferably the first and second directions are perpendicular (or substantially perpendicular). It is thereby arranged that attempts to forcibly separate the cover plate from the clamp body in the direction of insertion of the key-locking means can be opposed by the cooperating formations as well as the lock components, and it is not necessary for the lock components to resist the applied forces alone.

Preferably, the cover plate is more rigid than the back plate. The greater rigidity may be obtained by using thicker material, or by using appropriate reinforcement for the respective plates, or both. One of the ways in which a fitted wheel clamp is attacked by a person intent on forcibly removing it, is by seeking to forcibly remove the cover plate, or by seeking to separate the cover plate from the clamp body so as to expose the arm mountings and allow one or more of the arms to be released. Making the back plate less rigid than the cover plate has the advantage that the back plate will distort more readily than the cover plate under the applied loads when this method of attack is used, and since the back plate lies close to or against the road wheel any distortion is less likely to permit unauthorised disabling of the wheel clamp.

Additionally, by mounting the mushroom-headed pins to the back plate, any distortion of the back plate will likely also move or distort the mushroom-headed pin, effectively jamming the pin in its keyhole aperture and thereby making the second and/or third arms more secure and reducing the likelihood that the arm can be removed even if sufficient access to the mounting can be gained. This is especially relevant in the case where there are two or more mushroom-headed pins for each of the second and third arms - distorting the back plate will likely force the mushroom-headed pins either closer together or further apart and reduce the likelihood that the pins can subsequently be removed from their keyhole apertures.

Desirably, the mushroom-headed pins have a taper rather than a step between the head and the shaft. With such an arrangement attempts to forcibly separate a second or third arm from the back plate will cause the taper to be forced into or against the second region of the keyhole, and further increase the resistance to subsequent separation of those components.

The independent mounting of the second and third arms by way of at least one mushroom-headed pin, and the mounting of the top arm by way of a sleeve, results in a wheel clamp in which each of the arms can be fitted separately and sequentially to the clamp body as part of the fitting procedure. This leads to a particularly simplified fitment procedure in which the weight of the components being manipulated, and the complexity of the manipulation of each component, is significantly reduced. In a preferred embodiment there is provided a method of fitting a wheel clamp as herein defined which comprises the following steps:
{i} temporarily securing the first arm to the clamp body in a selected radial position,
{ii} positioning the clamp body and first arm adjacent to the road wheel, with the first arm passing over the road wheel and the clamp body being suspended from the road wheel by way of the first arm,
{iii} adjusting the position of the first arm relative to the clamp body if required to approximately centralise the clamp body on the road wheel, and securing the first arm relative to the clamp body,
{iv} fitting the second arm to the clamp body with its axial portion close to or in engagement with the road wheel,
{v} fitting the third arm to the clamp body with its axial portion close to or in engagement with the road wheel,
{vi} fitting the cover plate to the clamp body, and
{vii} fitting the key-locking means to lock the cover plate to the clamp body.

It will therefore be understood that the second and third arms, the cover plate and the key-locking means can all be fitted separately and sequentially whilst the weight of the clamp body is suspended from the road wheel by way of the first arm. It is therefore not necessary for the fitter to hold or support the clamp body whilst the second and third arms, cover plate and key-locking means are mounted. The fitter can therefore use one or two hands to fit each of those components, which significantly reduces the difficulty of the fitting operation.

The wheel clamp can be removed by reversing the above sequence of separate steps.

According to a second aspect of the invention, there is provided a wheel clamp comprising a clamp body to which three arms can be mounted, each of the arms having a radial portion and an axial portion, at least one of the arms having a return radial portion, the arms being securable at predetermined positions relative to the clamp body, the wheel clamp having a cover plate which is securable to the clamp body by a key-locking means, the clamp body including a back plate, the rigidity of the back plate being less than that of the cover plate.

The invention according to the second aspect takes advantage of the increased likelihood that the back plate is deformed rather than the cover plate when an attempt is made to forcibly remove the wheel clamp. This advantage can therefore be utilised independently of the benefits of the other aspects of the invention.

According to a third aspect of the invention, there is provided a wheel clamp comprising a clamp body to which a first arm, a second arm and a third arm can be mounted, each of the arms having a radial portion and an axial portion, at least one of the arms having a return radial portion, the m arms being securable at predetermined positions relative to the clamp body, the radial portion of each of the second and third arms having a longitudinal axis, the longitudinal axes intersecting at a point of intersection, the wheel clamp having a cover plate which is securable to the clamp body by a key-locking means, the wheel clamp having a lock boss for the key-locking means, the lock boss being located away from the point of intersection.

Generally, for a wheel clamp having three arms, the top arm and the bottom arms will be located approximately 120° apart, so that the longitudinal axis of the radial portion of all three arms intersect at the approximate centre of the clamp body. It is commonplace to locate the lock at the approximate centre, and as close to the point of intersection as possible, so that the lock provides equal support for all of the arms. However, the inventors have realised that a central location for the lock is not necessary, and in fact is not preferred with embodiments of the present invention. In particular, by locating the lock boss away from the point of intersection the radial adjustment of each of the arms is unhindered by the lock boss and is therefore maximised. Also, the key-locking means to some extent controls the location at which the cover plate will be deformed when sufficient force is applied. Locating the lock away from (and in the typical orientation of use below) the point of intersection encourages the cover plate to deform close to the lock boss; because the lock boss is spaced away from the bottom arms the likelihood of any forced deformation of the cover plate revealing the mounting of a bottom arm, or releasing a bottom arm from the cover plate, is much reduced.

Preferably, the lock boss is located upon the longitudinal axis of the first arm. Preferably also, the longitudinal axis of the first arm is located centrally upon the clamp body. In the typical orientation in which the first arm is the top arm, the longitudinal axis of the first arm will be substantially vertical when the wheel clamp is fitted, and the lock boss will be located centrally and below the point of intersection.

It will be understood that embodiments according to the first aspect of the invention may be shared with the second and/or third aspect of the invention with which they are compatible, and vice versa.

### BRIEF DESCRIPTION OF THE PREFERRED EMBODIMENTS

The invention will now be described in more detail, by way of example, with reference to the accompanying drawing, in which:
- Fig.1: is a front view of the clamp body of the wheel clamp according to the present invention;
- Fig.2: is a side view of the clamp body;
- Fig.3: is an exploded side view of one of the mushroom-headed pins for mounting a bottom arm to the clamp body;
- Fig.4: is a side view of the first or top arm;
- Fig.5: is a vertical cross-sectional view of the top arm;
- Fig.6: is a side view of one of the second or third (or bottom) arm;
- Fig.7: is a vertical cross-sectional view of a bottom arm;
- Fig.8: is a back view of the cover plate;
- Fig.9: is a plan view of the cover plate;
- Fig.10: is a side view of the cover plate;
- Fig.11: is a view of the bottom edge of the cover plate; and
- Fig.12: is a side view of a key-locking means of the wheel clamp.

### DETAILED DESCRIPTION

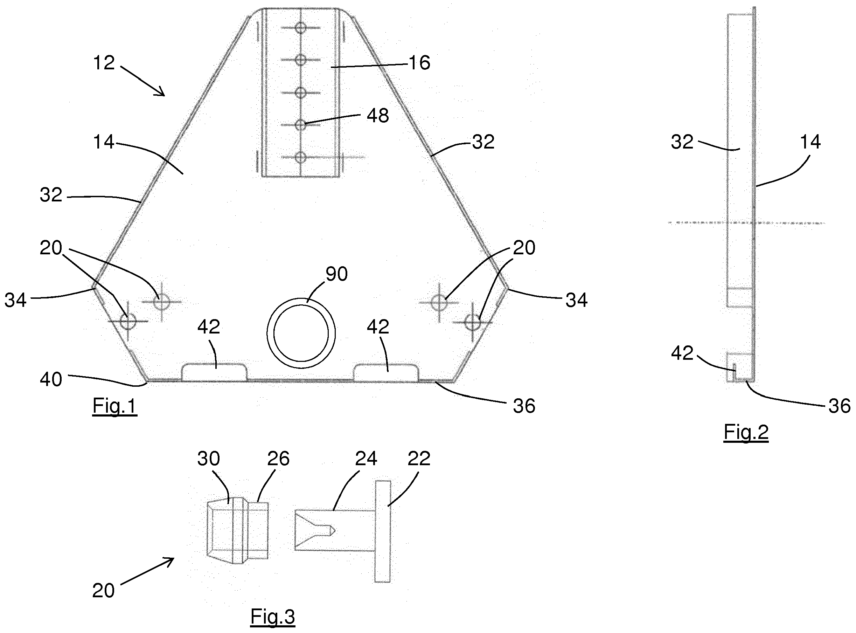

Figs. 1-12 of the drawings show a preferred embodiment according to all three aspects of the present invention and having two mushroom-headed pins for each of the second and third (or bottom) arms. It will be understood that alternative embodiments having only one mushroom-headed pin for each bottom arm, and further alternative embodiments according to only one or two aspects of the invention can alternatively be provided.

The wheel clamp comprises a clamp body 12 which comprises a generally flat back plate 14 of metal, in a generally triangular shape with truncated corners. A sleeve 16 is mounted (as by welding) to the back plate 14, and four mushroom-headed pins 20 are secured to the back plate.

A mushroom-headed pin 20 is shown in more detail in Fig.3. In this embodiment each mushroom-headed pin 20 is of two-piece construction, with the two pieces designed to be fitted from opposite sides of the back-plate 14 and to sandwich the back plate 14 between them. The first piece comprises a relatively large base 22 and a column 24, the base and column being permanently secured together. The second piece comprises a shaft 26 and an enlarged head 30. A hole is made through the back plate 14, the diameter of the hole being only slightly larger than the diameter of the column 24; the column 24 is passed through the hole (towards the viewer in the orientation of Fig.1) until the base 22 engages the rear surface of the back plate 14. The shaft 26 and head 30 are permanently secured to the column 24, for example by way of a rivet (not shown). Ideally, the bottom of the shaft 26 engages the front surface of the back plate 14 so that the back plate 14 is sandwiched (and ideally clamped) between the base 22 and the shaft 26.

In an alternative embodiment each mushroom headed pin is made as a one-piece component (perhaps formed by a turning operation), which is suitably attached to the back plate.

The two mushroom-headed pins 20 for each of the second and third (or bottom) arms, and the sleeve 16 for the first (or top) arm, are positioned so that they define an angular separation of 120° for the three arms. It will be understood that in an alternative embodiment having only one mushroom-headed pin 20 for each of the bottom arms, the back plate 14 could carry guides to control the desired orientation of the bottom arms.

Each side edge of the back plate 14 is bent through an angle of approximately 90° to define a side wall or rail 32, seen more clearly in Fig.2. The side rails pass around the corners 34 of the back plate, as shown in Figs. 1 and 2, it being understood that such rails add significant rigidity to the clamp body 12.

The bottom edge of the back plate 14 is also bent through a first angle of approximately 90° to define a bottom wall 36. The bottom wall 36 passes around the corners 40 of the back plate, as shown in Figs. 1 and 2, it being understood that such a wall adds further significant rigidity to the clamp body 12.

Parts of the bottom wall 36 are extended and are further bent through approximately 90° to form upstanding tabs 42, the tabs 42 being substantially parallel with the back plate 14 and spaced therefrom as most clearly seen in Fig.2.

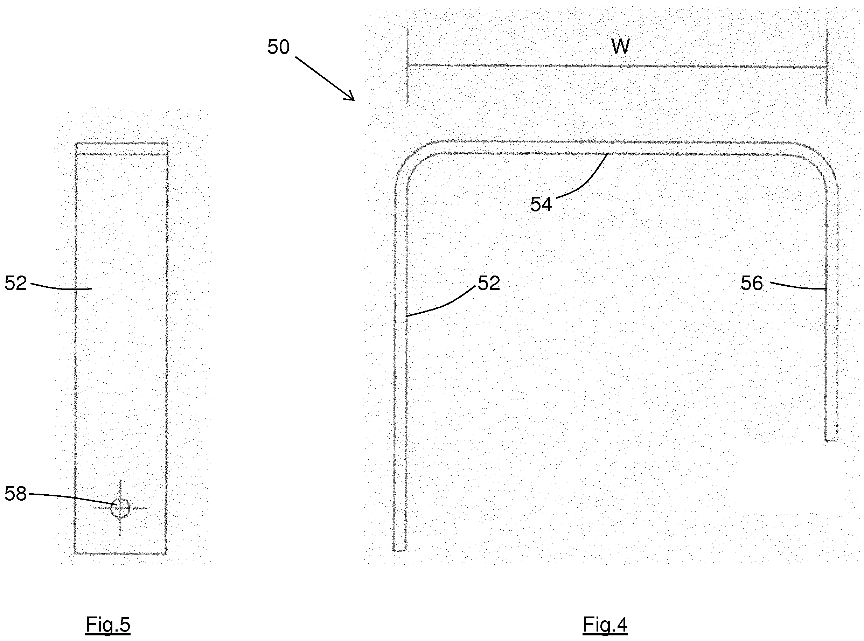

The top arm 50 for fitment to the clamp body 12 is shown in Figs. 4 and 5. The top arm has a radial portion 52 (which in use lies alongside a part of the front surface of the road wheel), an axial portion 54 (which in use lies alongside the tread of the tyre of the road wheel), and an return radial portion 56 (which in use lies alongside a part of the rear surface of the road wheel).

The radial portion 52 has a threaded aperture 58. The sleeve 16 has a number of (in this embodiment five) securing holes 48, each of which is slightly larger than the threaded aperture 58, and each of which can accommodate a threaded bolt (not shown) by which the top arm 50 may be secured to the clamp body 12. The sleeve 16 comprises a U-shaped bracket secured (as by welding) to the back plate 14, the sleeve 16 being of rectangular cross-section with a width and depth slightly larger than the width and thickness of the radial portion 52. The radial portion 52 of the top arm 50 can therefore slide within the sleeve 16 and the threaded aperture can be aligned with a chosen securing hole 48. The threaded bolt may then be passed through the chosen securing hole 48 and into the threaded aperture 58. Ideally, the threaded bolt has a large head so that it may be sufficiently tightened by hand to hold the top arm firmly in position relative to the clamp body 12.

In an alternative embodiment the aperture in the top arm is not threaded and instead the apertures 48 in the sleeve are threaded, the threaded bolt being screwed through the threaded aperture in the sleeve and into the unthreaded aperture in the top arm. In the event that the sleeve is not sufficiently thick to support a thread a nut may be welded to (or made captive on) the sleevel.

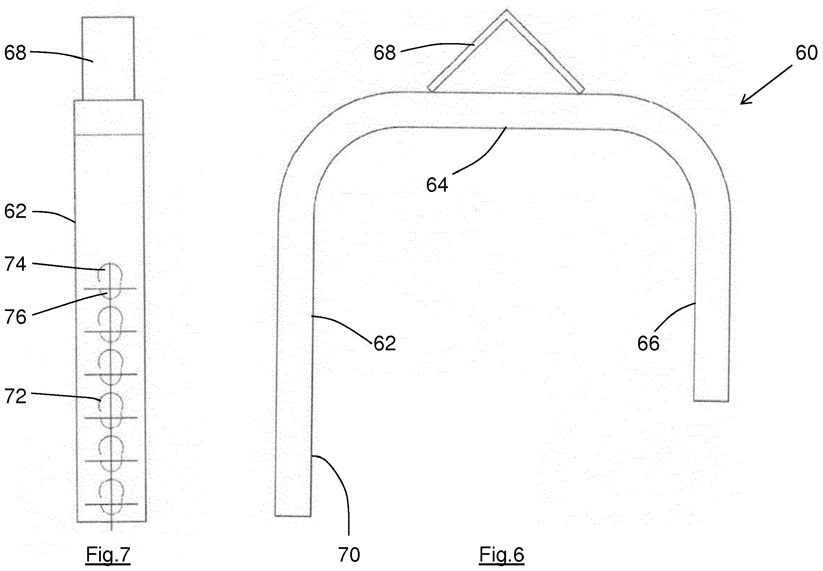

One of the two (identical) bottom arms 60 is shown in Figs. 6 and 7. Each bottom arm has a radial portion 62 (which in use lies alongside a part of the front surface of the road wheel), an axial portion 64 (which in use lies alongside the tread of the type of the road wheel), and an return radial portion 66 (which in use lies alongside a part of the rear surface of the road wheel). An extension 68 is secured to the axial portion 64, which extension is designed to foul the ground and/or a part of the vehicle if the road wheel is rotated whilst the wheel clamp is fitted, in known fashion.

The bottom arms 60 are hollow, i.e. tubular. The inner wall 70 of the radial portion 62 has a number of keyhole apertures 72 formed therethough.

As above indicated, each of the mushroom-headed pins has a head 30 which is of larger cross-sectional dimension than the shaft 26. Also, each keyhole aperture 72 has a first region 74 with a relatively large cross-sectional dimension and a second region 76 with a relatively small cross-sectional dimension. The head 30 of the mushroom-headed pin 20 can pass through the first region 74 but cannot pass through the second region 76. The second region 76 can accommodate (and is ideally only just wide enough to accommodate) the shaft 26 of the mushroom-headed pin 20.

The spacing between the keyhole apertures 72 matches the spacing between the mushroom headed pins 20 for each of the bottom arms 60, so that each bottom arm 60 is mounted to two mushroom-headed pins 20. In this way, the relative position and orientation of the bottom arms 60 relative to the clamp body 12, and thereby relative to each other and to the top arm 50, is predetermined and controlled.

To fit a bottom arm 60 to its pair of mushroom-headed pins 20, it is necessary to align two of the first regions 74 with the two mushroom-headed pins 20 and then to pass the head 30 of each mushroom-headed pin 20 through the respective first region and into the keyhole aperture 72. The bottom arm 60 can then be moved relative to the clamp body 12 so that the shaft 26 of each mushroom-headed pin 20 enters the respective second region 76.

It will be seen from Fig.7 that the orientation of the keyhole apertures 72 is such that the bottom arm 66 must be moved outwardly of the clamp body 12 to move the shafts 26 into the second regions 76.

It will be understood that if the diameter of the road wheel to which the wheel clamp is to be fitted is known, only one securing hole 68 is required, and only two keyhole apertures 72 are required in each bottom arm. However, if the diameter is not known, or if the wheel clamp is to be made suitable for a number of differently-sized wheels, a larger number of securing holes and keyhole apertures are required to provide a degree of adjustment.

The distance between the radial portion 52 and the return radial portion 56 of the top arm 50 is W. The bottom arms have a similar dimension so that the arms 50 60 are designed to fit a road wheel having a width slightly less than the width W. It will also be understood that the arms may in other embodiments include means for the adjustment of the length of the axial portions 54 and 64, to permit the wheel clamp to fit road wheels having different widths. In the present embodiment, however, different arms can be provided for different-width wheels.

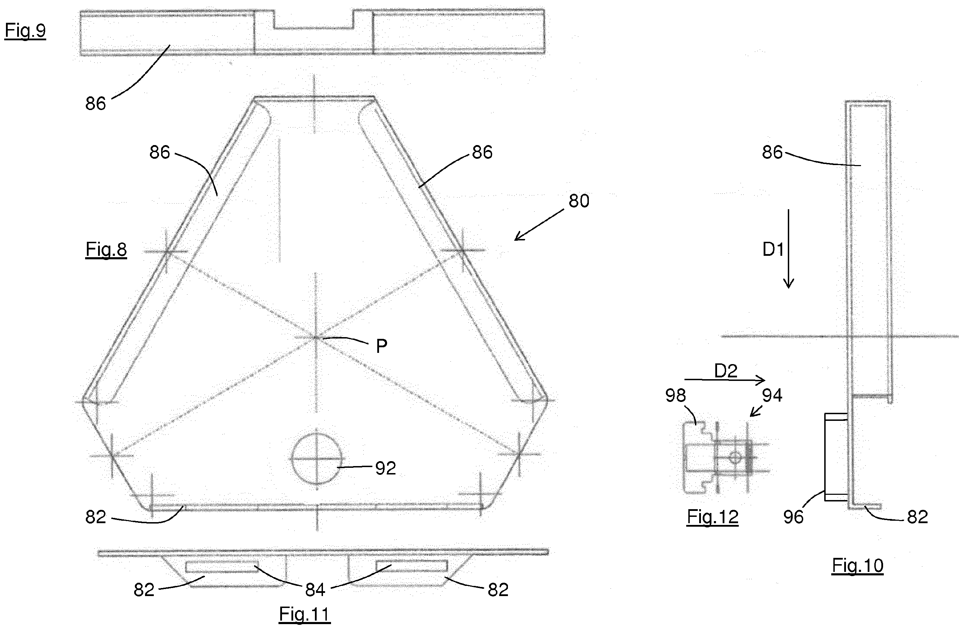

The cover plate 80 for fitment to the clamp body 14 is shown in Figs. 8-11. The cover plate 80 is a generally flat, generally triangular metal plate with truncated corners, sized to match closely the size of the back plate 14. The bottom edge 82 of the cover plate is bent through an angle of approximately 90°, the bottom edge having two slots 84 formed therethrough, each of the slots being sized and positioned to accommodate one of the tabs 4 of the clamp body.

The side edges of the cover plate 80 are bent through a first angle of approximately 90° and then bent again through an angle of approximately 90° to define a channel 86. The channels 86 can overlie and accommodate the respective rails 32 on each side edge of the clamp body 12.

Whilst the cover plate 80 is formed by a series of bending operations, in alternative embodiments it is fabricated from separate components, and in further alternative embodiments a combination of manufacturing methods is used.

The preferred means of assembling the wheel clamp according to the present invention will be described with reference to the drawings.

Firstly, the radial portion 52 of the top arm 50 is slid into the sleeve 16 and temporarily secured by way of the bolt passing through a selected securing hole 48 and into the threaded aperture 58. The clamp body 12 and top arm 50 are then positioned adjacent to the road wheel (not shown) with the radial portion 52 of the top arm approximately vertical and the axial portion 54 engaging the tread at the approximate top of the road wheel.

When so positioned, the surface of the clamp body which is visible in Fig.1 faces the user (i.e. that surface faces away from the road wheel). The sleeve 16 is therefore visible to the user, as is the bolt securing the top arm 50.

It is stated that the top arm is temporarily secured in the first stage described above since it may be necessary to adjust the position to the clamp body 12 so that it is approximately centred relative to the road wheel. The position of the clamp body 12 relative to the top arm 50 may be adjusted in situ, i.e. whilst the top arm rests upon the road wheel, or the clamp body and top arm may be moved away from the wheel for adjustment, as desired. In any event, the user is required only to manipulate the clamp body 12 and the top arm 50, and since the top arm can be held in position suspended from the road wheel this manipulation and adjustment is relatively straightforward. In one method of in-situ adjustment the user firstly supports the weight of the clamp body 12 and then removes the bolt securing the top arm 50. The user then moves the clamp body upwards or downwards as required so that the threaded aperture 58 is located behind the appropriate securing hole 48. The user then inserts and tightens the bolt to secure the top arm 50 and clamp body 12 together.

If, as expected, the wheel clamp is used intermittently for the same road wheel (for example for the same caravan each winter), then the top arm 50 does not need to be separated from the clamp body 12 and adjustment will not be required after the initial fitment.

In an alternative (but less desirable) embodiment the top arm is not separable from the clamp body, but is nevertheless adjustable relative to the clamp body.

A chosen bottom arm 60 is next manipulated to pass its return radial portion 66 around the back of the road wheel. The bottom arm is then moved so that its axial portion 64 is close to (or ideally in engagement with) the tread of the tyre of the road wheel. The bottom arm is then moved to align two of the keyhole apertures 72 with the mushroom-headed pins 20 and then to pass the respective first regions 74 of the keyhole apertures 72 over the heads 30 of the mushroom-headed pins 20. It will be seen from Fig.3 that the heads 30 have a slight taper to help centralise the head 30 in a first region 74 during this step of the procedure.

The bottom arm 60 is finally moved outwardly of the clamp body 12 so that the shaft 26 of each of the mushroom-headed pins 20 enters the respective second region 76 of the keyhole apertures 72.

This procedure is repeated for the other bottom arm 60.

The cover plate 80 is then fitted to the clamp body 12, in particular by sliding the cover plate downwardly from above (in the direction D1 of Fig.10) so that each rail 32 enters the respective channel 86 and each tab 42 enters the respective slot 84.

It will be understood that the cover plate 80 overlies and covers the mountings of the top and bottom arms, including the bolt which secures the top arm 50 to the sleeve 16 and all of the mushroom-headed pins 20. In addition, the heads 30 of the mushroom-headed pins 20 are inside the hollow tubular bottom arms and the method by which the bottom arms is secured is thereby covered and obscured by the cover plate 80 and also by the bottom arms themselves.

It will also be understood that the wheel clamp is stable even without a lock, i.e. the interlocking form of the clamp body 12 and cover plate 80 maintain all of the components together as described. It is therefore not necessary for the fitter to hold any parts of the wheel clamp in position whilst the key-locking means is fitted.

To secure the wheel clamp it is necessary to fit a key-locking means to lock the cover plate 80 in position. As seen in Fig. 1, the clamp body 12 has a circular boss 90 with an undercut groove (not seen). The cover plate 80 has a hole 92 which is aligned with the boss 90 and through which a suitable key-locking means 94 (Fig.12) can be passed. The hole 92 is surrounded by a boss 96 which closely surrounds the head 98 of the key-locking means 94 when fitted and reduces the likelihood that the head 98 can be attacked and the lock disabled. In known fashion, the key-locking means 94 has one or more projecting pins or the like (not shown) which can project into the undercut groove of the boss 90 to secure the cover plate 80 to the clamp body 12.

The fitment of the wheel clamp is therefore a sequence of separate steps, each of which involves the manipulation of only a single component which is significantly lighter and easier to handle than the known wheel clamps. Also, by effectively suspending the clamp body from the road wheel by way of the top arm, the fitter is presented with a self-supporting clamp body to which the other components can readily and easily be fitted as desired. The user is able to use one or both hands to fit each of the separate components, and does not need to use one hand to support other components, further simplifying the fitting procedure.

It will be seen that the bosses 90 and 96 are located relatively close to the bottom edge of the wheel clamp, and significantly lower than the point of intersection P of the longitudinal axes of the bottom arms 60. This has the first benefit of moving the boss 90 out of alignment with the bottom arms so that the range of (radial) adjustment for the bottom arms 60 is not hindered or restricted by the boss. The position of the boss 90 also enables an increase in the security of the wheel clamp.

The wheel clamp of the present invention can be made to be particularly secure against attempts to disable or remove it. Firstly, the back plate 14 and cover plate 80, with their associated bent edges forming cooperating walls 36, 82, rails 32 and channels 86, provides a general box-like structure which is inherently robust.

Secondly, it is arranged that the bottom arms 60 substantially fill the gaps at the truncated bottom corners of the wheel clamp, i.e. between the inturned side and bottom edges 32,36 and 82,86 of the clamp body and cover plate. Thus, access by way of a lever is made more difficult.

Thirdly, it is arranged that the back plate 14 is less rigid than the cover plate 80, suitably by being made from thinner-section metal. If a lever is nevertheless inserted underneath the cover plate 80, attempts to disable the wheel clamp by levering the cover plate away from the clamp body, will result in the back plate 14 deforming more readily than the cover plate 80. One effect of this is that the mountings for the two mushroom-headed pins 20 may be distorted, which will likely make it more difficult subsequently to remove a bottom arm. In this respect, it should be noted from Fig.3 that there is a taper rather than a step between the head 30 and the shaft 26 of the mushroom-headed pins, so that any distortion of the back plate 14 will likely cause the tapered parts to be forced into greater engagement with the keyhole aperture 72, effectively making it more difficult subsequently to remove the bottom arm. Distortion of the back plate 14 will also likely alter the separation of the mushroom-headed pins 20 for a each of the bottom arms; it is only necessary to alter the separation by a small amount to make the subsequent removal of the mushroom-headed pins from their respective key-hole apertures more difficult (or even impossible).

Also, the arrangement of the mushroom-headed pins and keyhole apertures, mean that attempts to forcibly separate a bottom arm 60 from the clamp body 12 in the axial direction is resisted by the material surrounding the keyhole aperture 72, which can be made very robust.

Furthermore, the key-locking means is inserted into the boss 90 in the axial direction (D2), but the cover plate 80 is removed in an upward direction (opposed to D1) substantially perpendicular to the axial direction. Accordingly, an attempt to forcibly separate the cover plate 80 from the clamp body 12 in the axial direction (opposed to D2) is resisted by the channels 86 and tabs 42 in addition to the key-locking means 94, and it is not necessary for the lock components alone to resist the forcible separation in that direction. Also, an attempt to forcibly separate the cover plate 80 in the direction opposed to D1 is resisted by the material of the lock body rather than the lock components.

As above indicated, one of the ways in which a wheel clamp may be attacked is by seeking to forcibly remove the cover plate or to distort the cover plate sufficiently to allow the clamp to be disabled. The present invention addresses these methods of attack by providing a cover plate 80 with greater rigidity than the back plate 14 as explained above. In addition, the interlocking channels providing a box-like structure, the detailed structure of the pins 20 and keyhole apertures 72, and the positioning of the lock boss 90 also reduce the likelihood of success of such methods of attack. A wheel clamp may also be attacked by drilling and/or cutting/sawing a part of the wheel clamp in order to disable it. The present invention also addresses these methods of attack by using hardened components.

The invention provides a wheel clamp of the first class for which fitment is made easier. This is achieved through the use of separate parts which are relatively light in weight and which can be manipulated separately to avoid the bulky subassemblies which characterise many of the known wheel clamps. The separate components are assembled "in-situ" (i.e. onto the wheel) in a logical progression without the need for tools. The invention also provides a wheel clamp which is made more resistant to the known methods of attack by virtue of its design and structure rather than by adding material and weight which characterises many of the known wheel clamps.

A generally triangular shape has been chosen for the wheel clamp because that is widely accepted as the "normal" shape for a wheel clamp. It will be understood, however, that the wheel clamp of the present invention is not limited to that shape and could be any suitable shape permitting the cover plate and back plate to be secured together as described and to form the desired box-like structure.

## Claims

1. A wheel clamp comprising a clamp body (12) and a first arm (50), a second arm (60) and a third arm (60), each of the arms having a radial portion (52, 62) and an axial portion (54, 64), at least one of the arms having a return radial portion (56, 66), the arms being securable at predetermined positions relative to the clamp body (12), **characterised in that**, the second and third arms (60) each being releasably mounted to the clamp body by way of at least one mushroom-headed pin (20) locatable in a keyhole aperture (72).

2. A wheel clamp according to claim 1 in which the pins (20) are mounted to the clamp body (12), and in which there are two pins for each of the second and third arms (60), the two pins (20) for each of the second and third arms being positioned to ensure that the second and third arms are mounted approximately 120° apart.

3. A wheel clamp according to claim 2 in which each of the second and third arms (60) has two or more keyhole apertures (72), the spacing between each neighbouring pair of keyhole apertures matching the spacing between the two mushroom-headed pins (20) of the second and third arms.

4. A wheel clamp according to any one of claims 1-3 in which the first arm (50) is releasably mounted to the clamp body (12).

5. A wheel clamp according to any one of claims 1-4 in which the first arm (50) is adjustably positioned relative to the clamp body (12).

6. A wheel clamp according to claim 5 in which the clamp body (12) has a sleeve (16) which can slidingly accommodate a part of the radial portion (52) of the first arm (50).

7. A wheel clamp according to claim 6 in which the sleeve (16) has at least one securing hole (48) through which a securing bolt can be passed, and the radial portion (52) of the first arm (50) has a threaded aperture (58) which can accommodate the securing bolt.

8. A wheel clamp according to claim 6 or claim 7 in which the sleeve (16) has a plurality of securing holes (48) through which the securing bolt can pass.

9. A wheel clamp according to any one of claims 1-8 in which the second and third arms (60) can be mounted in a plurality of positions upon the clamp body (12), the plurality of positions providing radial adjustment of the arms relative to the clamp body (12).

10. A wheel clamp according to any one of claims 1-9 in which at least the radial potion (62) of each of the bottom arms (60) has two spaced walls, and in which the keyhole aperture(s) (72) are formed through only one of the two spaced walls.

11. A wheel clamp according to any one of claims 1-10 in which the clamp body (12) includes a back plate (14) which lies close to or against the surface of a road wheel in use, the wheel clamp also having a cover plate (80) which is securable to the clamp body (12) by a key-locking means (94).

12. A wheel clamp according to claim 11 in which the cover plate (14) and back plate (80) have cooperating or interlocking formations (36, 82, 42, 84, 32, 86) by which they can be held together without the key-locking means.

13. A wheel clamp according to claim 11 or claim 12 in which the cover plate (80) is more rigid than the back plate (14).

14. A method of fitting a wheel clamp having a clamp body (12) and first, second and third arms (50, 60), each of the arms having a radial portion (52, 62) and an axial portion (54, 64), at least one of the arms having a return radial portion (56, 66), the arms being securable at predetermined positions relative to the clamp body (12), the second and third arms (60) each being releasably mounted to the clamp body by way of at least one mushroom-headed pin (20) locatable in a keyhole aperture (72), the method comprising the following steps:
{i} mounting the radial portion (52) of the first arm (50) to the clamp body (12) in a selected position,
{ii} positioning the clamp body (12) and first arm (50) adjacent to a road wheel, with the first arm passing over the road wheel and the clamp body being suspended from the road wheel by way of the first arm,
{iii} fitting the second arm (60) to the clamp body (12) with the axial portion (64) of the second arm close to or in engagement with the road wheel,
{iv} fitting the third arm (60) to the clamp body (12) with the axial portion (64) of the third arm close to or in engagement with the road wheel,
{v} fitting a cover plate (80) to the clamp body (12), and
{vi} fitting a key-locking means (94) to lock the cover plate (80) to the clamp body (12).

15. The method according to claim 14 in which the cover plate (80) is fitted to the clamp body (12) in step {v} by moving the cover plate in a first direction (D1) relative to the clamp body, and in which the key-locking means (94) is fitted in step {vi} by moving the key-locking means in a second direction (D2) relative to the clamp body, the second direction (D2) being substantially perpendicular to the first direction (D1).

## Patentansprüche

1. Radklemme mit einem Klemmkörper (12) und einem ersten Arm (50), einem zweiten Arm (60) und einem dritten Arm (60), wobei jeder der Arme einen radialen Abschnitt (52, 62) und einen axialen Abschnitt (54, 64) aufweist, wobei mindestens einer der Arme einen radialen Rückführabschnitt (56, 66) aufweist, wobei die Arme an vorbestimmten Positionen relativ zum Klammerkörper (12) befestigbar sind, **dadurch gekennzeichnet, dass** der zweite und der dritte Arm (60) sind jeweils mittels mindestens eines in einer Schlüssellochöffnung (72) positionierbaren Stifts (20) mit Pilzkopf lösbar am Klemmkörper angebracht.

2. Radklemme nach Anspruch 1, bei der die Stifte (20) am Klammerkörper (12) montiert sind und bei der es zwei Stifte für jeden der zweiten und dritten Arme (60) gibt, wobei die beiden Stifte (20) für jeden der zweiten und dritten Arme so positioniert sind, dass sichergestellt ist, dass die zweiten und dritten Arme in einem Abstand von etwa 120° montiert sind.

3. Radklemme nach Anspruch 2, bei der jeder der zweiten und dritten Arme (60) zwei oder mehr Schlüssellochöffnungen (72) aufweist, wobei der Abstand zwischen jedem benachbarten Paar von Schlüssellochöffnungen dem Abstand zwischen den beiden Stiften (20) mit Pilzkopf des zweiten und dritten Arms entspricht.

4. Radklemme nach einem der Ansprüche 1-3, bei der der erste Arm (50) lösbar am Klammerkörper (12) befestigt ist.

5. Radklemme nach einem der Ansprüche 1-4, bei der der erste Arm (50) relativ zum Klammerkörper (12) verstellbar positioniert ist.

6. Radklemme nach Anspruch 5, bei der der Klemmkörper (12) eine Hülse (16) aufweist, die einen Teil des radialen Abschnitts (52) des ersten Arms (50) gleitend aufnehmen kann.

7. Radklemme nach Anspruch 6, bei der die Hülse (16) mindestens ein Befestigungsloch (48) aufweist, durch das ein Sicherungsbolzen geführt werden kann, und der radiale Teil (52) des ersten Arms (50) eine Gewindeöffnung (58) aufweist, die den Sicherungsbolzen aufnehmen kann.

8. Radklemme nach Anspruch 6 oder 7, bei der die Hülse (16) eine Vielzahl von Befestigungslöchern (48) aufweist, durch die der Befestigungsbolzen hindurchgehen kann.

9. Radklemme nach einem der Ansprüche 1-8, bei der der zweite und dritte Arm (60) in mehreren Positionen auf dem Klammerkörper (12) montiert werden kann, wobei die mehreren Positionen eine radiale Einstellung der Arme relativ zum Klammerkörper (12) ermöglichen.

10. Radklemme nach einem der Ansprüche 1-9, bei der zumindest der radiale Teil (62) jedes der unteren Arme (60) zwei beabstandete Wände aufweist und bei der die Schlüssellochöffnung(en) (72) durch nur eine der beiden beabstandeten Wände hindurch gebildet ist (sind).

11. Radklemme nach einem der Ansprüche 1-10, bei der der Klammerkörper (12) eine Rückenplatte (14) aufweist, die im Gebrauch nahe an oder gegen die Oberfläche eines Straßenrades liegt, wobei die Radklemme auch eine Abdeckplatte (80) aufweist, die durch eine Schlüsselverriegelungsmittel (94) am Klammerkörper (12) befestigt werden kann.

12. Radklemme nach Anspruch 11, bei der die Abdeckplatte (14) und die Rückenplatte (80) zusammenwirkende oder ineinandergreifende Ausbildungen (36, 82, 42, 84, 32, 86) aufweisen, durch die sie ohne die Schlüsselverriegelungsmittel zusammengehalten werden können.

13. Radklemme nach Anspruch 11 oder 12, bei der die Abdeckplatte (80) steifer ist als die Rückenplatte (14).

14. Verfahren zum Anbringen einer Radklemme mit einem Klammerkörper (12) und einem ersten, zweiten und dritten Arm (50, 60), wobei jeder der Arme einen radialen Abschnitt (52, 62) und einen axialen Abschnitt (54, 64) aufweist, wobei mindestens einer der Arme einen radialen Rückführabschnitt (56, 66) aufweist, wobei die Arme an vorbestimmten Positionen relativ zum Klammerkörper (12) befestigbar sind, wobei der zweite und dritte Arm (60) sind jeweils mittels mindestens eines in einer Schlüssellochöffnung (72) positionierbaren Stifts (20) mit Pilzkopf lösbar am Klammerkörper befestigt sind, wobei das Verfahren die folgenden Schritte umfasst:
{i} Montage des radialen Abschnitts (52) des ersten Arms (50) an den Klemmkörper (12) in einer ausgewählten Position,
{ii} Positionierung des Klemmkörpers (12) und des ersten Arms (50) neben einem Laufrad, wobei der erste Arm über das Laufrad geführt wird und der Klammerkörper über den ersten Arm am Laufrad aufgehängt ist,
{iii} Anbringen des zweiten Arms (60) an den Klemmkörper (12), wobei der axiale Abschnitt (64) des zweiten Arms nahe am oder im Eingriff mit dem Laufrad ist,
{iv} Anbringen des dritten Arms (60) an den Klemmkörper (12), wobei der axiale Abschnitt (64) des dritten Arms nahe am oder im Eingriff mit dem Laufrad ist,
{v} Anbringen einer Abdeckplatte (80) an den Klemmkörper (12), und
{vi} Anbringen einer Schlüsselverriegelungsmittel (94) zum Verriegeln der Abdeckplatte (80) am Klemmkörper (12).

15. Verfahren nach Anspruch 14, bei dem die Abdeckplatte (80) in Schritt {v} an dem Klemmkörper (12) angebracht wird, indem die Abdeckplatte in einer ersten Richtung (D1) relativ zu dem Klemmkörper bewegt wird, und bei dem die Schlüsselverriegelungsmittel (94) in Schritt {vi} angebracht wird, indem die Schlüsselverriegelungsmittel in einer zweiten Richtung (D2) relativ zu dem Klemmkörper bewegt wird, wobei die zweite Richtung (D2) im wesentlichen senkrecht zu der ersten Richtung (D1) ist.

## Revendications

1. Pince de roue comprenant un corps de pince (12) et un premier bras (50), un deuxième bras (60) et un troisième bras (60), chacun des bras ayant une partie radiale (52, 62) et une partie axiale (54, 64), au moins un des bras ayant une partie radiale de retour (56, 66), les bras pouvant être fixés dans des positions prédéterminées par rapport au corps de pince (12), **caractérisé en ce que** les deuxième et troisième bras (60) sont chacun montés de manière amovible sur le corps de pince au moyen d'au moins une broche à tête de champignon (20) pouvant être placée dans une ouverture de trou de serrure (72).

2. Pince de roue selon la revendication 1, dans laquelle les broches (20) sont montées sur le corps de pince (12), et dans laquelle il y a deux broches pour chacun des deuxième et troisième bras (60), les deux broches (20) pour chacun des deuxième et troisième bras étant positionnées de manière à assurer que les deuxième et troisième bras sont montés à environ 120° l'un de l'autre.

3. Pince de roue selon la revendication 2, dans laquelle chacun des deuxième et troisième bras (60) présente deux ou plusieurs ouvertures en forme de trou de serrure (72), l'espacement entre chaque paire voisine d'ouvertures en forme de trou de serrure correspondant à l'espacement entre les deux broches à tête de champignon (20) des deuxième et troisième bras.

4. Pince de roue selon l'une des revendications 1-3, dans laquelle le premier bras (50) est monté de manière amovible sur le corps de pince (12).

5. Pince de roue selon l'une des revendications 1-4 dans laquelle le premier bras (50) est positionné de manière réglable par rapport au corps de pince (12).

6. Pince de roue selon la revendication 5, dans laquelle le corps de pince (12) comporte un manchon (16) qui peut recevoir de manière coulissante une partie de la partie radiale (52) du premier bras (50).

7. Pince de roue selon la revendication 6, dans laquelle le manchon (16) présente au moins un trou de fixation (48) à travers lequel un boulon de fixation peut être passé, et la partie radiale (52) du premier bras (50) présente une ouverture filetée (58) qui peut recevoir le boulon de fixation.

8. Pince de roue selon la revendication 6 ou la revendication 7, dans laquelle le manchon (16) comporte une pluralité de trous de fixation (48) à travers lesquels le boulon de fixation peut passer.

9. Pince de roue selon l'une quelconque des revendications 1-8, dans laquelle les deuxième et troisième bras (60) peuvent être montés dans une pluralité de positions sur le corps de pince (12), la pluralité de positions permettant un ajustement radial des bras par rapport au corps de pince (12).

10. Pince de roue selon l'une quelconque des revendications 1 à 9, dans laquelle au moins la partie radiale (62) de chacun des bras inférieurs (60) présente deux parois espacées, et dans laquelle la ou les ouvertures en forme de trou de serrure (72) sont formées à travers une seule des deux parois espacées.

11. Pince de roue selon l'une quelconque des revendications 1-10, dans laquelle le corps de pince (12) comprend une plaque arrière (14) qui se trouve à proximité ou contre la surface d'une roue de route en service, la pince de roue ayant également une plaque de recouvrement (80) qui peut être fixée au corps de pince (12) par un moyen de verrouillage à clé (94).

12. Pince de roue selon la revendication 11, dans laquelle la plaque de recouvrement (14) et la plaque arrière (80) présentent des formations coopérantes ou s'emboîtant (36, 82, 42, 84, 32, 86) par lesquelles elles peuvent être maintenues ensemble sans le moyen de verrouillage à clé.

13. Pince de roue selon la revendication 11 ou la revendication 12 dans laquelle la plaque de recouvrement (80) est plus rigide que la plaque arrière (14).

14. Procédé de montage d'une pince de roue ayant un corps de pince (12) et des premier, deuxième et troisième bras (50, 60), chacun des bras ayant une partie radiale (52, 62) et une partie axiale (54, 64), au moins un des bras ayant une partie radiale de retour (56, 66), les bras pouvant être fixés à des positions prédéterminées par rapport au corps de pince (12), les deuxième et troisième bras (60) étant chacun montés de manière amovible sur le corps de pince au moyen d'au moins une broche à tête de champignon (20) pouvant être placée dans une ouverture de trou de serrure (72), le procédé comprenant les étapes suivantes :
{i} montage de la partie radiale (52) du premier bras (50) sur le corps de pince (12) dans une position choisie,
{ii} placement du corps de pince (12) et le premier bras (50) à côté d'une roue de route, le premier bras passant au-dessus de la roue de route et le corps de pince étant suspendu à la roue de route par le premier bras,
{iii} montage du deuxième bras (60) sur le corps de pince (12), la partie axiale (64) du deuxième bras étant proche de la roue de route ou en prise avec celle-ci,
{iv} montage du troisième bras (60) sur le corps de pince (12), la partie axiale (64) du troisième bras étant proche de la roue de route ou en prise avec celle-ci,
{v} fixation d'une plaque de recouvrement (80) sur le corps de pince (12), et
{vi} installation d'un moyen de verrouillage à clé (94) pour verrouiller la plaque de recouvrement (80) au corps de pince (12).

15. Procédé selon la revendication 14, dans lequel la plaque de recouvrement (80) est montée sur le corps de pince (12) à l'étape {v} en déplaçant la plaque de recouvrement dans une première direction (D1) par rapport au corps de pince, et dans lequel le moyen de verrouillage à clé (94) est monté à l'étape {vi} en déplaçant le moyen de verrouillage à clé dans une deuxième direction (D2) par rapport au corps de pince, la deuxième direction (D2) étant sensiblement perpendiculaire à la première direction (D1).
